(19) **Europäisches Patentamt**

**European Patent Office**

**Office européen des brevets**

(11) **EP 0 549 189 B1**

(12) **EUROPEAN PATENT SPECIFICATION**

(45) Date of publication and mention
of the grant of the patent:
**07.05.2003  Bulletin 2003/19**

(51) Int Cl.$^7$: **G06T 17/10**

(21) Application number: **92311198.3**

(22) Date of filing: **09.12.1992**

(54) **Solid model generation by span method using dividing cubes**

Erzeugung von Festkörpermodellen mit dem Spannverfahren unter Anwendung von Würfelteilung

Génération de modèles solides par une méthode d'évaluation de dimension utilisant des cubes divisants

(84) Designated Contracting States:
**DE GB**

(30) Priority: **23.12.1991  US 812479**

(43) Date of publication of application:
**30.06.1993  Bulletin 1993/26**

(73) Proprietor: **GENERAL ELECTRIC COMPANY**
**Schenectady, NY 12345 (US)**

(72) Inventors:
 • **Cline, Harvey Ellis**
  **Schenectady, New York 12309 (US)**
 • **Lorensen, William Edward**
  **Ballston Lake, New York 12019 (US)**
 • **Ludke, Siegwalt**
  **Scotia, New York 12302 (US)**

(74) Representative: **Pedder, James Cuthbert et al**
 **GE London Patent Operation,**
 **Essex House,**
 **12/13 Essex Street**
 **London WC2R 3AA (GB)**

(56) References cited:
 **EP-A- 0 204 225     EP-A- 0 216 156**
 **EP-A- 0 365 141     EP-A- 0 376 181**
 **US-A- 4 985 834**

 • **MEDICAL PHYSICS vol. 15, no. 3, May 1988, NEW YORK, USA pages 320 - 327 CLINE ET AL 'Two algorithms for the three-dimensional reconstruction of tomograms'**
 • **SYSTEMS & COMPUTERS IN JAPAN vol. 22, no. 3, 1991, NEW YORK US pages 94 - 107 SUTO ET AL 'An Algorithm for Removing Sections of Bone from X-Ray CT Models'**

**Description**

CROSS REFERENCE TO RELATED APPLICATIONS

This application is related to EP-A-0576193 - *System for 3D Scan Conversion of a Polygonal Model Into A Point and Normal Format, Displayed Utilizing an Accelerator Circuit,* EP-A-0549183 - *System For Displaying Solid Cuts For Surfaces of Solid Models and* EP-A-6549182 - *Apparatus and Method For Displaying Surgical Cuts in Three-Dimensional Models* all filed simultaneously with this application, and all assigned to the present assignee.

BACKGROUND OF THE INVENTION

1. Field of the Invention

The present invention relates to a three-dimensional (or 3D) graphics workstation and more specifically a three-dimensional graphics workstation which can rapidly manipulate surface models displayed as solids.

2. Description of Related Art

Conventional computer graphic methods transform solids into a number of polygons, usually triangles, which approximate the surface of a solid model, called a surface model. These triangles are defined by vertex points (x,y,z) and a normal vector $(n_x,n_y,n_z)$ indicating a direction normal to the surface that is being simulated. Usually a large number of triangles are required to define a surface.

Another method of displaying a surface is to use actual three-dimensional data sets which are then processed to determine the difference in values of adjacent volume elements ("voxels"), that define a surface. This method requires a large amount of memory and powerful processors. The large amount of memory adds to the cost of the device, while the processing requirement reduces the speed in which the image is produced. When the image is cut or rotated, the image must be redrawn. This leads to a time lapse between each frame. This becomes important when the user desires a real-time or near real-time manipulation of the model. Currently there is a need for a device which can manipulate solid models and display them in near real-time which do not require a large amount of memory, or powerful processors.

Polygonal models may be generated by conventional computer aided design/computer aided manufacture (CAD/CAM) systems or from volumetric data as described in the "marching cubes" method of U.S. Patent 4,710,876, *System and Method for the Display of Surface Structures Contained Within the Interior Region of a Solid Body* by Harvey E. Cline and William E. Lorensen issued Dec. 1, 1987, assigned to the present assignee and hereby incorporated by reference. These polygonal models may then be displayed by a conventional method described above.

Another method of displaying models called the "dividing cubes" method. The method begins with volumetric data and creates a surface model described by a number of points and normals vectors associated with each point rather than polygons. The "dividing cubes" method has been used to display the surfaces of volume medical data and is described in U.S. Patent 4,719,585, *Dividing Cubes System and Method for the Display of Surface Structures Contained Within the Interior Region of a Solid Body by* Harvey E. Cline, Siegwalt Ludke, and William E. Lorensen, issued Jan. 12, 1988 ("Dividing Cubes") assigned to the present assignee and incorporated by reference. This method allows much more rapid rotation and display of a model as compared to conventional display methods, and requires far less processing power.

In certain situations, such as for surgical planning, it is necessary to determine if a model is inside or outside of another model. Surgical planning is the simulation of surgery on a graphics workstation using actual data acquired from the subject to be operated on. Surface models created by conventional methods may create a surface that only partially encloses an internal region. This is called an open surface model. In this case, it is difficult to determine if another model, not intersecting the surface, extends into the internal region of the open surface model. If one model simulates a scalpel and another simulates tissue of a subject, it would be difficult to determine if the scalpel has cut into the tissue if at least one model is an open surface model.

Surface models which define a closed continuous surface and surround a region are known as closed surface models. Intersection between closed surface models can be determined. If, however, a closed surface model is bisected and a portion of the surface is removed, such as is the case in surgical planning, it becomes an open surface model thereby incorporating all of the simulation problems encountered with open surface models.

Open surface models are therefore difficult to use in solid modeling such as surgical planning. It would be useful to create models which identify an internal region associated with a model instead of only the surfaces of the internal region, that is easily manipulated and displayed.

Medical Physics Vol. 15 No. 3, May 1988 New York USA, pages 320 - 327, describes two algorithms for three-dimensional reconstruction of tomograms using a normalised gradient technique.

SUMMARY OF THE INVENTION

According to the invention, there is provided a graphics workstation and method for manipulating a volumetric data set as defined in claims 1 and 5

Thus it is a feature of the present invention to provide a method of solid modelling which can be used in surgical planning and that identifies an internal region associated with a model that is easily manipulated and displayed.

Another feature of the present invention is to provide a graphics workstation which can display solid models and manipulate them in near real-time.

Another feature of the present invention is to provide a method that makes it practical to manipulate solid models on processor roughly the size and power of a personal computer.

Another feature of the present invention is to provide a method of displaying solid models which does not require a large amount of memory as compared with conventional computer graph imaging methods.

Another feature of the present invention is to provide a method of storing image data in condensed form for a graphic workstation.

Another feature of the present invention is to make manipulation of solid models practical on a relatively low-power workstation by reducing processing time.

Another feature of the present invention is to provide a workstation that provides capability to manipulate and display volumetric data models.

The graphics workstation of the invention incorporates a custom circuit to create and manipulate solid models from volumetric data obtained from an imaging apparatus.

An imaging apparatus such as magnetic resonance imaging (MRI), computed actual tomography (CAT), positron emission tomography (PET), etc. scans a subject to create volumetric data which is sent to a span processor. The span processor searches the volumetric data for spans of solid material of internal models, and condenses the data by storing the data in a hierarchical fashion in the span memory as a display list. The models are stored as spans of a solid model instead of a surface model.

The span processor converts the display list to a point and normal display list and stores it in a point and normal display list memory. A user employs input devices to select planes in which to cut the structures in the model, three-dimensional orientation of the model, and screen cut planes which define a workstation viewing region. A model clipping circuit determines points within the model cut planes. A rotate circuit rotates point and normal vectors in the point and normal display list and determines shading based upon the orientation of the normal vector at each point. A screen clipping circuit determines points within a region defined by screen cut planes. A display circuit displays a three-dimensional image of multiple surfaces that are within the desired display region and the screen cut planes. The workstation is capable of displaying the models as shaded three-dimensional solid surfaces redrawn at a rate of several times per second on a low power graphics workstation, allowing near-realtime manipulation.

BRIEF DESCRIPTION OF THE DRAWINGS

The invention will now be described in greater detail, by way of example, with reference to the drawings in which:

Fig. 1 is a simplified block diagram of the system of the present invention.

Fig. 2 is an illustration of a model to be displayed intersecting a model clip box and a screen clip box according to the present invention.

Fig. 3 shows a volumetric data layer representing a cross-section through a subject, with a number of spans and scan lines superimposed across the data layer.

Fig. 4 is an illustration of 'neighbor' voxels used in calculating a normal vector.

Fig. 5a and 5b together are a flow chart of the method by which the scan processor converts volumetric data into a display list.

Fig. 6 is a hierarchical diagram illustrating the structure of the display list.

DETAILED DESCRIPTION OF THE INVENTION

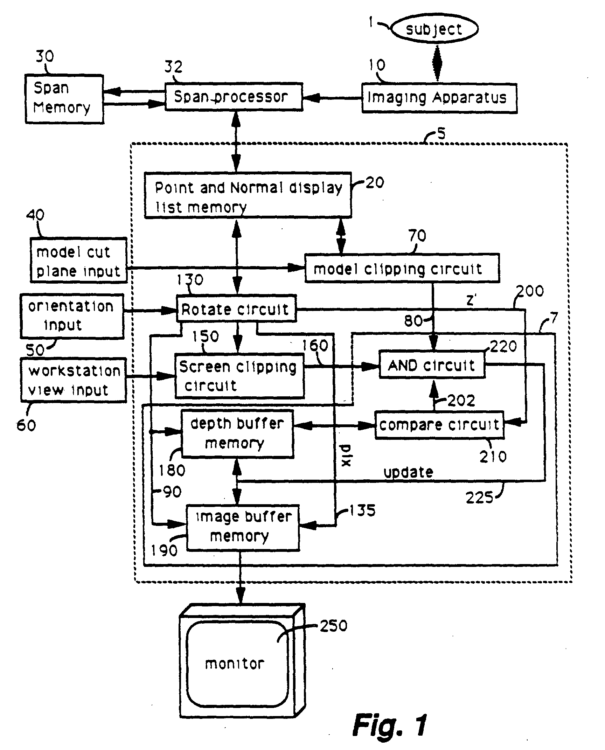

In Figure 1 an imaging apparatus 10 acquires three-dimensional (3D) volumetric data of a subject 1 to create a set of three-dimensional volumetric data of subject 1 which is passed to a span processor 32. Span processor 32 scans the volumetric data received from imaging apparatus 10 to determine interface points (x, y,z) between different types of materials within volumetric data. Span processor 32 determines the beginning and end of a solid portion, defined as a span, and stores a number of spans as a display list in span memory 30.

For purposes of rapid display, span processor 32 converts the display list to a closed surface model (not shown) comprised of points (x,y,z) and normal vectors associated with each point $(n_x, n_y, n_z)$. The point and normal display list is stored in point and normal display list memory 20 of accelerator board 5.

Many elements of the accelerator board are similar to elements shown and described in U.S. Patent 4,985,834 *System and Method Employing Pipelined Parallel Circuit Architecture For Displaying Surface Structures of the Interior Region of a Solid Body* by Harvey E. Cline, Richard I. Hartley, Siegwalt Ludke and Sharbel E. Noujaim issued Jan. 15, 1991 assigned to the present assignee and hereby incorporated by reference.

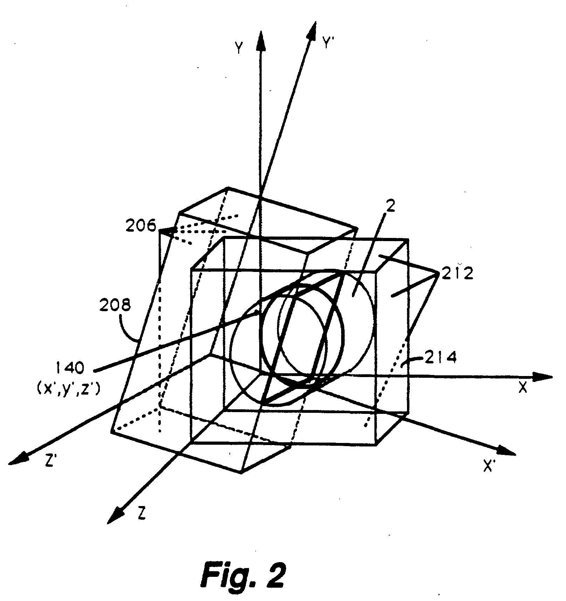

With reference to Figs. 1 and 2, a user actuates a model cut plane input device 40 to select sections through a model 2 to be displayed, the sections being the model cut planes 206. These planes are defined in reference to model 2 and remain fixed with respect to model 2 throughout rotation of model 2. The user actuates orientation input device 50 to select a three-dimensional orientation of model 2 in space, and actuates a workstation view input device 60 to select screen view planes 212 to cut through model 2. Screen view planes 212 remain fixed with respect to a monitor 250 screen and the X,Y,Z coordinate system (workstation space), but change relative to model 2 and the X',Y',Z' coordinate system (model space) as the model is rotated. The parameters from input devices 40, 50, 60 are used to manipulate and display portions of the 3D model.

A model clipping circuit 70 receives the model cut planes 206 from input device 40 and determines a model clip box 208 defined by the model cut planes 206. Model clipping circuit 70 then compares each point (x, y,z) in display list memory 20 to determine if it is within model clip box 208. If a point (x,y,z) lies within model clip box 208, a select line 80 connecting model clipping circuit 70 and an AND circuit 220 is set 'high' by circuit 70.

A rotate circuit 130 receives the orientation input parameters from orientation input device 50 and creates a 4X4 transformation matrix. Both point (x,y,z) and the normal vector $(n_x,n_y,n_z)$ are transformed by rotate circuit 130 to yield a transformed point (x',y',z') 140 and a pixel intensity used for shading the image. Rotate circuit 130 transforms the point (x,y,z) and the normal vector $(n_x,n_y,n_z)$ according to the following equations:

$$x' = m_{11}x + m_{12}y + m_{13}z + m_{14}$$

$$y' = m_{21}x + m_{22}y + m_{23}z + m_{24}$$

$$z' = m_{31}x + m_{32}y + m_{33}z + m_{34}$$

$$pix = m_{41}n_x + m_{42}n_y + m_{43}n_z$$

where "$m_{11} ... m_{43}$" are matrix elements calculated to orient and translate the model and pix is the calculated pixel intensity used to shade the surface. (Matrix element $m_{44}$ is 0.) Rotate circuit 130 passes the rotated coordinate (x',y') along an address bus 90 to both a depth buffer memory 180 and an image buffer memory 190. The coordinate (x',y') is used as an address of both memories. Rotate circuit 130 also passes the pixel intensity pix along bus 135 to image buffer memory 190.

A screen clipping circuit 150 receives the screen view planes 212 from workstation view input device 60 and creates a screen clip box 214 similar to the model clip box 208, but which is stationary with respect to the screen of monitor 250. The transformed point (x', y',z') 140 is compared to the screen clip box 214 in the space of the workstation. If point (x',y',z') 140 is within screen clip box 214, line 160 connecting screen clipping circuit 150 to AND circuit 220 is set 'high' by circuit 150.

A display circuit 7 displays exposed surfaces of an image created from the transformed points within the desired region. The image resembles a solid object with superficial surfaces being visible and surfaces which lie behind the superficial surfaces being hidden. The display circuit is comprised of depth buffer memory 180, AND circuit 220, image buffer memory 190 and a compare circuit 210.

Compare circuit 210 receives a depth coordinate z' along a bus 200 and compares the depth z' with a present value in the depth buffer 180 at address (x', y'). If the depth z' of the present point (x',y',z') is closer to the viewer (i.e., has a smaller value) than the previous depth stored in depth buffer memory 180 at address (x', y'), then compare circuit 210 sets a depth line 202 connected to AND circuit 220 'high'.

AND circuit 220 sets an 'update' line 225 connected to both the depth buffer memory 180 and image buffer memory 190 'high' when it senses lines 80, 160 and 202 all being 'high', causing the pixel intensity pix to be stored at address (x',y') of the image buffer memory, thereby shading an image displayed on monitor 250. This also causes depth z' to be stored at address (x',y') of depth buffer memory, thereby updating the present depth at address (x',y'). After each display list in the model has been processed, the shaded 3D image is transferred to monitor 250 for display.

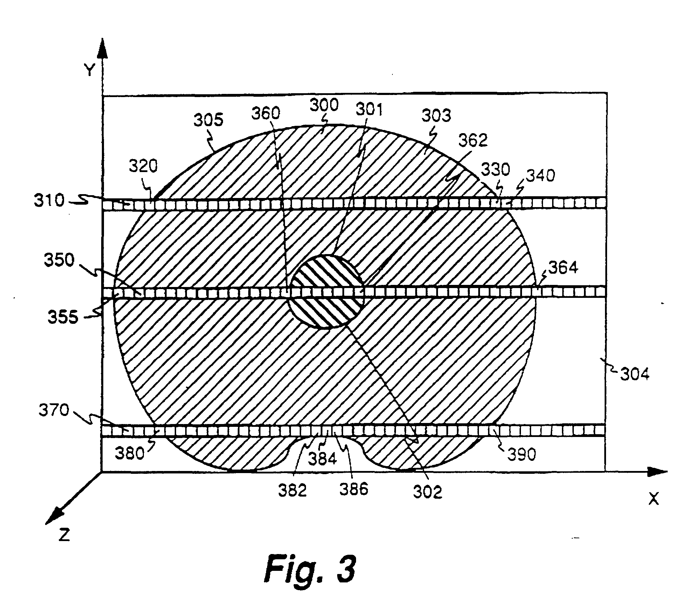

As shown in Fig. 1, span processor 32 receives a layer of volumetric data originally obtained from imaging apparatus 10. This layer, as shown in Fig. 3, pertains to one plane of data, for example, data for all values of x and y coordinates having a constant z coordinate and represents a section through subject 1.

Initially volumetric data from imaging apparatus (10 of Fig. 1) is refined by splitting the volumetric data into smaller cubes and interpolating two intermediate data layers to produce refined data layers to be used in calculating 'neighbor' voxels. A next refined data layer is interpolated by span processor 32 of Fig. 1.

In Fig. 3 a refined data layer 300 is shown composed of a material 303 which differs from the adjoining materials 302 and 304. Surface 301 is the interface between materials 302 and 303. Similarly, surface 305 is the interface between materials 303 and 304, all contained within the refined volumetric data. All voxels along a line in the x direction are a single scan line such as scan line 350. The span processor processes voxels a scan line at a time for a given y and z coordinate such as scan line 310 for example. Other scan lines 350 and 370 are shown for different y coordinates. Span processor 32 determines volume elements or "voxels" that intersect surfaces, such as voxels 320, 330 and 340 intersecting surface 305. These are referred to as interface voxels. Scan line 310 is comprised of one span through model 300 starting at voxel 320 and ending at voxels 330 and 340 encompassing a solid material 303.

A span is a line segment inside a model defined by a number of points and normal vectors where the scan line intersects the surfaces of the model, even if the surfaces are internal surfaces such as surface 301. Spans define points inside the solid, unlike a surface model wherein only points on a surface are defined.

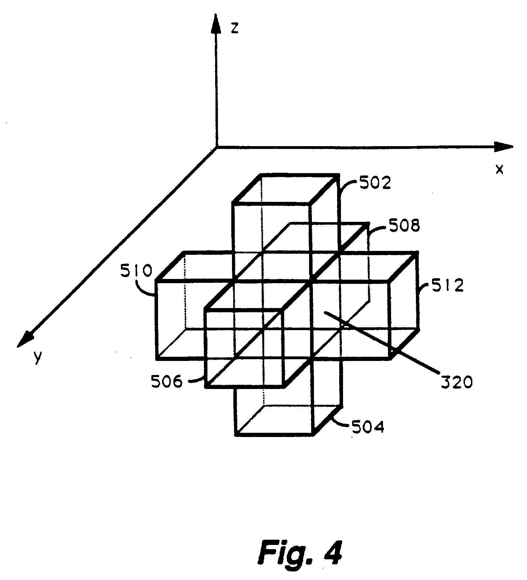

Once an interface voxel has been determined, its normal vector must be calculated. The method of calculating the normal vectors is explained in more detail in the aforementioned "dividing cubes" patent 4,719,585. Briefly, this method requires choosing a present voxel to be processed and finding the 'neighbor' voxels to the present voxel. In Fig. 4, voxel 320, being the present voxel, is shown in an enlarged three-dimensional view with 'neighbor' voxels. The 'neighbor' voxels are an upper voxel 502 immediately above the present voxel, a lower voxel 504 immediately below the present voxel, front 506 and rear 508 voxels immediately in front of, and behind the present voxel respectively, and a left 510 and right 512 voxel immediately to the left and right of the present voxel,respectively. These 'neighbor' voxels are data entries from the refined data layers.

Span processor 32 of Fig. 1 finds a data entry at each point associated with each 'neighbor' voxel in the refined data layers and interpolates a voxel value for each 'neighbor' voxel. Span processor 32 then subtracts the lower voxel value from the upper voxel value to arrive at a z vector difference, then subtracts the right voxel value from the left voxel value to arrive at an x vector difference, and then subtracts the front voxel value from the rear voxel value to arrive at a y vector difference. Span processor 32 next adds the x, y and z vector differences to arrive at a vector sum, and then normalizes the vector sum to a unit vector $(n_x,n_y,n_z)$ by conventional methods. Each of the differences obtained from the 'neighbor' voxels subtractions represents a gradient of the voxel values, and when added the vector sum indicates the direction of a vector normal to the surface.

Each of the scan lines, such as scan line 350 of Fig. 3, is processed by the span processor. Thus, interface voxels for scan line 350 are voxels 355, 360, 362, and 364. Voxel 355 is the first voxel of the first span in scan line 350, and voxel 360 indicates the end of the first span of the same scan line. Voxel 362 indicates the beginning of the second span in scan line 350 with voxel 364 indicating the end of the second span. Similarly, the voxels which intersect surfaces in scan line 370 are voxels 380, 382, 384, 386, and 390. Since the interface points are important in producing solid models, and the remaining points can be produced from the interface points, only the interface points need to be stored to create a solid model.

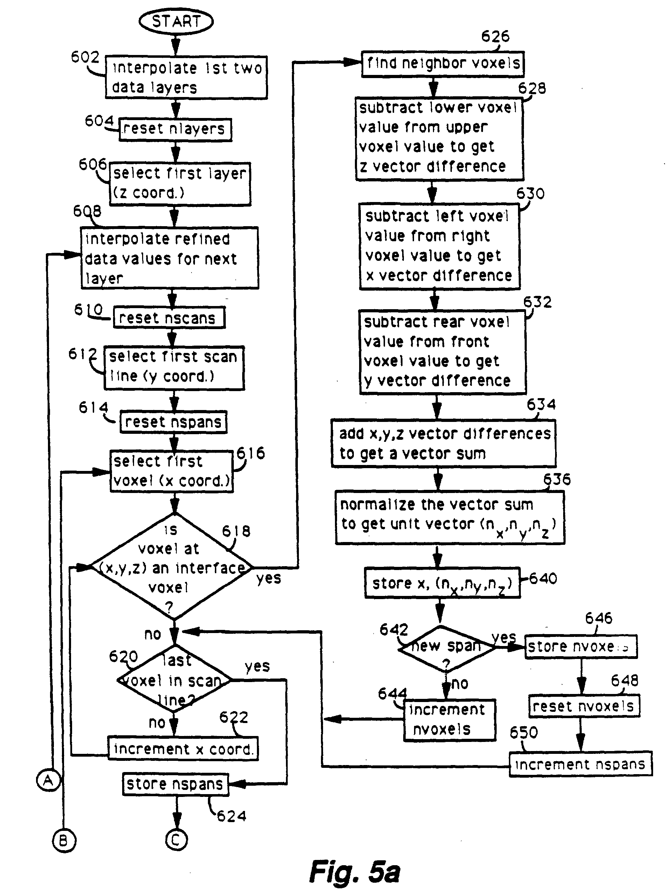

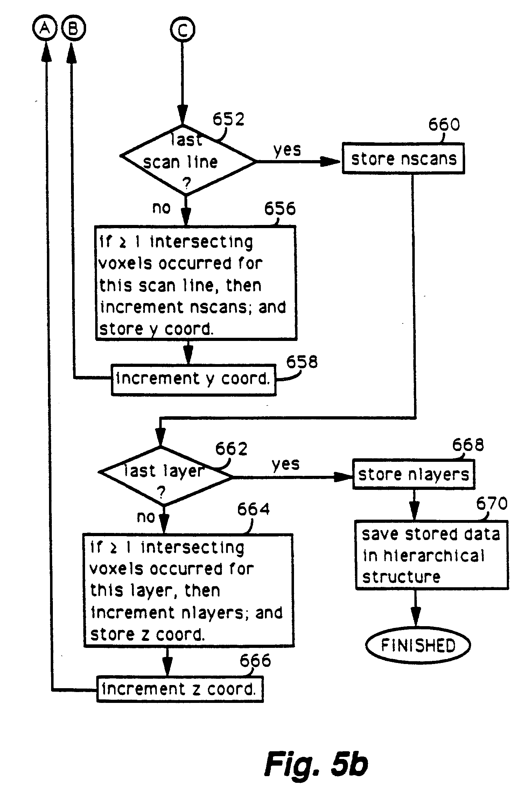

Span processor 32 of Fig. 1 condenses volumetric data into a display list and stores the list in span memory 30 of Fig. 1 according to the steps of the flow chart of Figs. 5a and 5b, with points A, B and C of Fig. 5a joined to points A, B and C of Fig. 5b, respectively.

Volume data from imaging apparatus 10 of Fig. 1 is interpolated to create two refined data layers from the received volume data at step 602. At steps 604 and 606, the first layer of data corresponding to all x and y locations for a first z location is selected. Refined data for the next layer used in defining 'neighbor' voxels is interpolated at step 608. At step 610 a counter nscans is set to the first scan and the first scan line is selected at step 612. At step 614 a counter counting the number of scans per present scan line is reset. At step 616 a first voxel in the present scan line of the present data layer is selected and is tested at step 618 to determine if it is at an interface between two differing materials. If the present voxel is not an interface voxel, a determination is made at step 620 as to whether the present voxel is the last voxel in the scan line. If the present voxel is not the last voxel in the present scan line, a next voxel is chosen as the present voxel at step 622 and processing continues at step 618. If the present voxel is the last voxel in the present scan line, a counter representing the number of spans nspans is stored at step 624 in a temporary memory, which is unused portion of either point and normal display memory 20 or span memory 30 of Fig. 1. Only counters which represent a non-empty set are stored.

If the present voxel is an interface voxel, neighbor voxels are found at step 626. A z vector difference is calculated by subtracting the upper voxel value from the lower voxel value at step 628. An x vector difference is calculated by subtracting the right voxel value from the left voxel value at step 630. And a y vector difference is calculated by subtracting the rear voxel value from the front voxel value at step 632. Vector addition is executed at step 634 by adding the z, x and y vector differences to arrive at a vector sum. The vector sum is normalized at step 636 to result in a unit vector $(n_x,n_y,n_z)$ normal to the surface at point (x,y,z) within the present voxel. At step 640 the x coordinate and the normal vector $(n_x,n_y,n_z)$ of the present voxel is stored in the temporary memory.

At step 642, whether the present voxel is the last voxel in the span is determined. If the present voxel is the last voxel in the span, a counter counting the number of voxels nvoxels in a span stores this number in the temporary memory at step 646 and is reset at step 648; a counter representing the number of spans in a scan line is incremented and processing continues at step 620.

If the present voxel is not the last voxel in the span, the counter is incremented at step 644 and processing continues at step 620.

At step 624, a count nspans representing the number of spans in a scan line is stored in the temporary memory. At step 652 a determination is made as to whether the present scan line is the last scan line in the present data layer. If the present scan line is the last scan line, the count representing the number nscans of scan lines is stored in the temporary memory at step 660 and processing continues at step 662.

If the present scan line is not the last scan line and at least one intersecting voxel was found in the present scan line, the count nscans is incremented, and the y coordinate is stored in the temporary memory at step 656. The y coordinate is incremented making the next scan line the present scan line at step 658, and processing continues at step 616.

At step 662 a determination is made as to whether the present data layer is the last data layer. If the present data layer is not the last data layer, a count nlayers is incremented if at least one intersecting voxel has been found in the present data layer. The z coordinate is incremented to cause the next data layer to be the present layer and processing continues at step 608.

If the present data layer is the last data layer, the count nlayers representing the number of layers having at least one interface voxel is stored in the temporary memory at step 668.

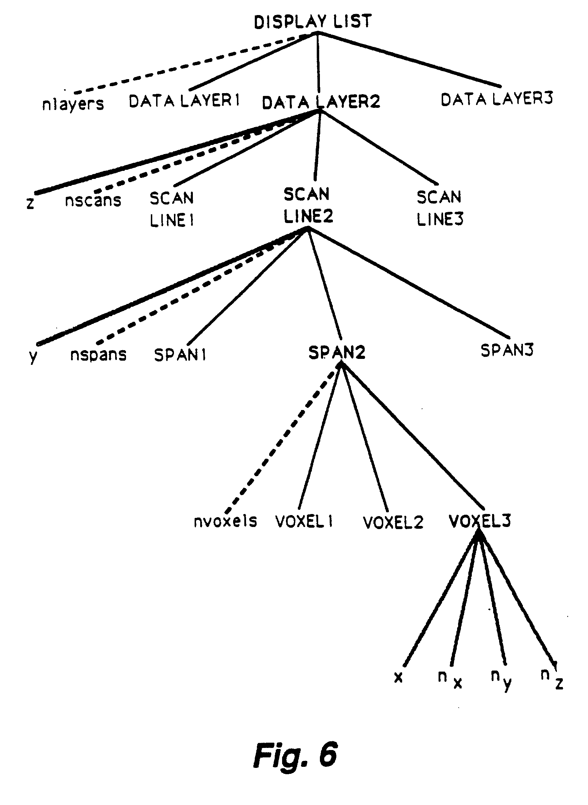

Finally, at step 670, the data stored in the temporary memory is rearranged and stored in the hierarchical format of Fig. 6 in span memory 30 of Fig. 1.

The hierarchical structure of Fig. 6 eliminates much of the redundant data and allows the surface information to be stored in a compact form, thereby reducing the amount of memory required. The display list contains a number of layers or layer data sets equal to nlayers. Each layer data set has a unique z coordinate. Each scan line data set is comprised of a number of spans equal to, nspans, each at a unique y coordinate for a data layer. Each span has a number of intersecting voxels equal to nvoxels. Each intersecting voxel has a normal vector associated with it and a unique x coordinate for a given scan line. By storing the data in the order shown in Fig. 6, only an x coordinate and a normal vector are repeated for each voxel of a span instead of all x, y, z coordinates and normal vectors, thereby reducing the memory required. Similarly, only one y coordinate needs to be stored for each scan line, data set and one z coordinate needs to be stored for each layer data set. Points that are not interface points are not stored, further reducing the memory required.

Referring now to Figs. 1 and 6, span processor 32 converts the display list to a point and normal display list to be stored in point and normal display list memory 20 of accelerator board 5. Span processor 32 first reads value nlayers from span memory 30 representing a number of data layers in the display list. For the first data layer, span processor 32 next treads nscans relating to the number of scan lines in the data layer, together with the z coordinate for this data layer, from span memory 30. Span processor 32 then reads the y coordinate and the number of spans, nspans, in the first scan line. Span processor 30 next reads the number of voxels, nvoxels, contained in the first span, and reads an x coordinate and a normal vector for each voxel in the span, from span memory 30. Span processor 32 linearly interpolates the coordinates and normal vectors of regularly spaced intermediate points from the points and normal vectors $(n_x, n_y, n_z)$ of the present span. The resulting intermediate points and normal vectors are stored in display list memory 30 for fast rendering.

Scan processor 32 repeats this process for all spans, nspans, in a scan line, all scan lines, nscans, in a data layer and all data layers, nlayers, in the display list. After all the volumetric data has been scanned by span processor 32 and stored as a display list in span memory 30, solid models can be generated and manipulated in near real-time.

Since the models created by the present invention more closely resemble solid models instead of empty surface models, they can be cut and intersected with other solids more quickly and without the uncertainty of prior art methods, resulting in an efficient solid manipulation tool.

While several presently preferred embodiments of the invention have been described in detail herein, many modifications and variations will now become apparent to those skilled in the art. It is, therefore, to be understood that the appended claims are intended to cover all such modifications and variations as fall within the scope of the invention claimed.

## Claims

1.  A graphics workstation for manipulating a volumetric data set to display three-dimensional surface images of a subject represented by the data set comprising a first input device (40) for defining model cut planes of the subject, a second input device (50) for defining a three-dimensional orientation of the subject in space , a third input device (60) for defining screen views planes to cut through the subject and a monitor (250) for displaying graphic images characterized by

    a) a span memory (30) for receiving and storing the volumetric data set produced by the data from the first, second and third input devices
    b) a span processor (32) for receiving the volumetric data set and processing the volumetric data set to create a span list that is more compact than the volumetric data set, the span processor havingmeans for storing the data set in the span memory, for reading the span list from the span list memory and for converting the span list to a point and normal display list (20) comprised of point - (x',y',z') and corresponding normal vectors $(n_x, n_y, n_z)$; and comprising

    i) means for reading a value from span memory indicating the number of scan lines;
    ii) means for reading a y coordinate for a scan line and a plurality of spans in this scan line from the span memory;

iii) means for reading a value from the span memory indicating the number of voxels in this span;

iv) means for reading a location along the scan line and a normal vector $(n_x, n_y, n_z,)$ for all voxels in each span;

v) means for linearly interpolating a set of regularly spaced coordinates for a set of intermediate points between the coordinates for this span;

vi) means for linearly interpolating a normal vector for each intermediate point from the normal vectors $(n_x n_y, n,)$ read for the present span;

vii) means for storing the interpolated coordinates along with corresponding normal vectors as a display list memory for fast rendering;

viii) means for repeating steps "iii" - "vii" for all spans in this scan lines; and

ix) means for repeating steps "ii" - "vii" for all scan lines in the data set and

c) an accelerator board (5) employing a depth buffer (180), the accelerator board being adapted for receiving (10) the model cut planes, three dimensional orientation (130), screen view planes (150), and point and normal display list and adapted to create a three-dimensional shaded image of a solid surface from the point and normal display list according to the model cut planes, the three-dimensional orientation, and the screen view planes, and to display the image at a rate of several times per second on the monitor.

2. The graphics workstation of claim 1 wherein the accelerator board comprises:

a) a point and normal display list memory (20) adapted for storing point and normal display lists;

b) a model clipping circuit (70) responsive to said point and normal display list memory and said first input device (40) for creating a signal indicating when a point (x,y,z) is within a region specified by model cut planes defined by the first input device;

c) a rotate. circuit (130) responsive to said point and normal display list memory (20) and said second input device (50) for transforming each point (x,y,z) and normal vector $(n_x, n_y, n_z,)$ in the point and normal display list according to the three-dimensional orientation received from the second input device to a transformed point (x',y',z') having an address (x',y'), a depth Z, and a pixel intensity pix;

d) a screen clipping circuit (150) responsive to said rotate circuit (1 30) and said third input device (60) for creating a signal indicating when a transformed point (x',y',z') is within the region defined by screen view planes received from the third input device;

e) a display circuit (180, 210, 220, 190) for forming a three dimensional (M) image of multiple surfaces from the transformed point (x',y',z') and the pixel intensity, pix, in response to signals received from the model chipping and screen clipping circuits and for passing the 3D image to the monitor to be displayed.

3. The graphics workstation of claim 1 or 2 wherein the display circuit comprises.

a) a depth buffer memory (180) coupled to the rotate circuit (130) for receiving an address (x', y') from the rotate circuit and storing a depth at address (x',y');

b) a compare circuit (210) coupled (200) to the rotate circuit (130) and the depth buffer memory (180), said compare circuit being adapted to,

(1) receive a signal representing the depth z' from the rotate circuit,

(2) read the present depth stored in address (x',y') of the depth buffer memory and compare it to depth z' received from the rotate circuit, and

(3) create a signal indicating whether depth z' is closer to the user than the present depth stored in the depth buffer memory;

(c) and AND circuit (220) adapted to

(1) receive a signal from the model clipping circuit indicating if the point (x',y',z') is within the region defined by the model cut planes,

(2) receive a signal from the screen clipping circuit indicating if the point (x',y',z') is within the region defined by the screen view planes, and

(3) receive the signal from the compare circuit, and

(4) create an update signal indicating when point (x',y',z') is within both the regions defined by the model cut planes and the screen view planes and has a depth z' less than the depth in the depth buffer memory at address (x',y'); and

(d) an image buffer memory (190) having an address corresponding to each point of the display monitor, said image buffer memory being adapted to receive the address (x',y') and the signal indicating the pixel intensity pix from the rotate circuit, to receive the update signal created by theAND circuit, and to store the pixel intensity pix at address (x',y') creating an image to be displayed on the monitor.

4. The graphics workstation of any one of claims 1 to 3 including a three-dimensional imaging apparatus coupled thereto and comprising one of the group consisting of a positron emission tomography system, a magnetic resonant imaging system, a computerized axial tomography system, a three-dimensional ultrasound system, and a three-dimensional RADAR system, and a three-dimensional digital data source for providing volumetric data to define said surface model.

5. A method of converting a span list to a point and normal display list, said span list listing spans comprising line segments where the scan line intersects the surfaces of a model, the method comprising the steps of:

a) reading a value from span memory indicating the number of scan lines;

b) reading a y coordinate for a scan line and a plurality of spans in this scan line from the span memory;

c) reading a value from the span memory indicating the number of voxels in this span;

d) reading a location along the scan line and a normal vector $(n_x, n_y n_z,)$ for all voxels in each span;

e) linearly interpolating a set of regularly spaced coordinates for a set of intermediate points between the coordinates for this span;

f) linearly interpolating a normal vector for each intermediate point from the normal vectors $(n_x n_y, n,)$ read for the present span;

g) storing the interpolated coordinates along with corresponding normal vectors as a display list memory for fast rendering;

h) repeating steps "c" - "g" for all spans in this scan lines; and

i) repeating steps "b" - "h" for all scan lines in the data set.

**Patentansprüche**

1. Graphik-Workstation zum Handhaben eines volumetrischen Datensatzes zum bildlichen Darstellen von dreidimensionalen Oberflächenbildern von einem Gegenstand, der durch den Datensatz dargestellt werden soll, enthaltend eine erste Eingabevorrichtung (40) zum Definieren von Modellschnittebenen des Gegenstandes, eine zweite Eingabevorrichtung (50) zum Definieren einer dreidimensionalen Orientierung des Gegenstandes im Raum, eine dritte Eingabevorrichtung (60) zum Definieren von durch den Gegenstand zu schneidenden Schirmansichtenebenen und einen Monitor (250) zum Darstellen von graphischen Bildern, **gekennzeichnet durch**

a) einen Spannen-Speicher (30) zum Empfangen und Speichern des volumetrischen Datensatzes, der **durch** die Daten aus den ersten, zweiten und dritten Eingabevorrichtungen erzeugt sind,

b) einen Spannen-Prozessor (32) zum Empfangen des volumetrischen Datensatzes und zum Bearbeiten des volumetrischen Datensatzes, um eine Spannen-Liste zu kreieren, die kompakter als der volumetrische Datensatz ist, wobei der Spannen-Prozessor Mittel zum Speichern des Datensatzes im Spannen-Speicher, zum Lesen der Spannen-Liste aus dem Spannen-Listen-Speicher und zum Wandeln der Spannen-Liste in eine Punkt- und Normalen-Display-Liste (20) hat, die von Punkt- (x',y',z') und entsprechenden Normalvektoren $(n_x, n_y, n_z)$ gebildet ist, und enthaltend

i) Mittel zum Lesen eines Wertes aus dem Spannen-Speicher, der die Anzahl von Abtastlinien anzeigt,

ii) Mittel zum Lesen einer y Koordinate für eine Abtastlinie und einer Anzahl von Spannen in dieser Abatstlinie aus dem Spannen-Speicher,

iii) Mittel zum Lesen eines Wertes aus dem Spannen-Speicher, der die Anzahl von Voxeln in dieser Spanne anzeigt,

iv) Mittel zum Lesen eines Ortes entlang der Abtastlinie und eines Normalvektors $(n_x, n_y, n_z)$ für alle Voxel in jeder Spanne,

v) Mittel zum linearen Interpolieren eines Satzes von in regelmässigen Abständen angeordneten Koordinaten für einen Satz von Zwischenpunkten zwischen den Koordinaten für diese Spanne,

vi) Mittel zum linearen Interpolieren eines Normalvektors für jeden Zwischenpunkt von den Normalvektoren $(n_x, n_y, n_z)$, die für die vorliegende Spanne gelesen sind,

vii) Mittel zum Speichern der interpolierten Koordinaten zusammen mit entsprechenden Normalvektoren als einen Display-Listen-Speicher zum schnellen Ratern,

viii) Mittel zum Wiederholen der Schritte "iii" - "vii" für alle Spannen in dieser Abtastlinie und

ix) Mittel zum Wiederholen der Schritte "ii" - "vii" für alle Abtastlinien in dem Datensatz und

c) eine Beschleunigerkarte (5), die einen Tiefenpuffer (180) verwendet, wobei die Beschleunigerkarte geeigenet ist zum Empfang (10) der Modellschnittebenen, der dreidimensionalen Orientierung (130), der Schirmansichtenebenen (150) und der Punkt- und Normalen-Display-Liste und in der Lage ist, ein dreidimensionales schattiertes Bild von einer geschlossenen Oberfläche aus der Punkt- und Normalen-Display-Liste gemäß den Modellschnittebenen, der dreidimensionalen Orientierung und der Schirmansichtenebenen zu kreieren und das Bild mit einer Geschwindigkeit von mehreren Malen pro Sekunde auf dem Monitor darzustellen.

2.    Graphik-Workstation nach Anspruch 1, wobei die Beschleunigerkarte enthält:

a) einen Punkt- und Normalen-Display-Listen-Speicher (20), der Punkt- und Normalen-Display-Listen speichern kann,

b) eine Modell-Clipping-Schaltung (70), die auf den Punktund Normalen-Display-Listen-Speicher und die erste Eingabevorrichtung (40) anspricht zum Kreieren eines Signals, das anzeigt, wann ein Punkt (x,y,z) innerhalb eines Bereiches ist, der durch Modellschnittebenen spezifiziert ist, die durch die erste Eingabevorrichtung definiert sind,

c) eine Drehschaltung (130), die auf den Punkt- und Normalen-Display-Listen-Speicher (20) und die zweite Eingabevorrichtung (50) anspricht, zum Transformieren jedes Punktes (x, y,z) und Normalvektors $(n_x,n_y,n_z)$ in der Punkt- und Normalen-Display-Liste gemäß der dreidimensionalen Orientierung, die von der zweiten Eingabevorrichtung empfangen ist, und einem transformierten Punkt (x',y',z'), der eine Adresse (x',y'), eine Tiefe Z und eine Pixelintensität pix hat,

d) eine Schirm-Clipping-Schaltung (150), die auf die Drehschaltung (130) und die dritte Eingabevorrichtung (60) anspricht, zum Kreieren eines Signals, das anzeigt, wenn ein transformierter Punkt (x',y',z') innerhalb des Bereiches ist, der durch die Schirmansichtenebenen definiert ist, die von der dritten Eingabevorrichtung empfangen sind,

e) eine Display-Schaltung (180,210,220,190) zum Formen eines dreidimensionalen (M) Bildes mit vielen Oberflächen von dem transformierten Punkt (x',y',z') und der Pixelintensität, pix, als Antwort auf Signale, die von den Modell-Clipping- und Schirm-Clipping-Schaltungen empfangen sind, und zum Leiten des darzustellenden Bildes zum Monitor.

3.    Graphik-Workstation nach Anspruch 1 oder 2, wobei die Display-Schaltung enthält:

a) einen Tiefen-Pufferspeicher (180), der mit der Drehschaltung (130) gekoppelt ist, zum Empfangen einer Adresse (x',y') von der Drehschaltung und zum Speichern einer Tiefe an der Adresse (x',y'),

b) eine Vergleichsschaltung (210), die mit der Drehschaltung (130) und dem Tiefen-Pufferspeicher (180) gekoppelt ist (200), wobei die Vergleichsschaltung in der Lage ist zum

(1) Empfangen eines Signals, das die Tiefe z' von der Drehschaltung darstellt,
(2) Lesen der vorhandenen Tiefe, die in der Adresse (x',y') des Tiefen-Pufferspeichers gespeichert ist, und Vergleichen derselben mit der Tiefe z', die von der Drehschaltung empfangen ist, und
(3) Kreieren eines Signals, das anzeigt, ob die Tiefe z' näher an dem Benutzer ist als die vorhandene Tiefe, die in dem Tiefen-Pufferspeicher gespeichert ist,

c)und eine UND-Schaltung (220), die in der Lage ist zum

(1) Empfangen eines Signals von der Modell-Clipping-Schaltung, das anzeigt, wenn der Punkt (x',y',z') innerhalb des Bereiches ist, der durch die Modellschnittebenen definiert ist,
(2) Empfangen eines Signals von der Schirm-Clipping-Schaltung, das anzeigt, wenn der Punkt (x',y',z') innerhalb des Bereiches ist, der durch die Schirmansichtenebenen definiert ist, und
(3) Empfangen des Signals von der Vergleichsschaltung und
(4) Kreieren eines Aktualisierungssignals, das anzeigt, wenn ein Punkt (x',y',z') in den beiden Bereichen ist, die durch die Modell-Schnittebenen und die Schirmansichtenebenen definiert sind, und eine Tiefe z' hat, die kleiner als die Tiefe in dem Tiefen-Pufferspeicher an der Adresse (x',y') ist, und

d) einen Bild-Pufferspeicher (190) mit einer Adresse, die jedem Punkt des Display-Monitors entspricht, wobei der Bild-Pufferspeicher in der Lage ist, die Adresse (x',y') und das Signal zu empfangen, das die Pixelintensität pix von der Drehschaltung anzeigt, das Aktualisierungssignal zu empfangen, das durch die UND-Schaltung kreiert ist, und die Pixelintenstät pix an der Adresse (x',y') zu speichern, die ein auf dem Monitor darzustellendes Bild kreiert.

**4.** Graphik-Workstation nach einem der Ansprüche 1 bis 3, die eine dreidimensionale Bildgebungseinrichtung enthält und eine aus der Gruppe, die aus einem Positronemissions-Tomographiesystem, einem Magnetresonanz-Bildgebungssystem, einem Computer-Axialtomographiesystem, einem dreidimensionalen Ultraschallsystem und einem dreidimensionalen RADAR System besteht, und eine dreidimensionale digitale Datenquelle aufweist zum Liefern volumetrischer Daten, um das Oberflächenmodell zu definieren.

**5.** Verfahren zum Wandeln einer Spannen-Liste in eine Punkt- und Normalen-Display-Liste, wobei die Spannen-Liste Spannen listet, die Liniensegments enthalten, wo die Abtastlinie die Oberflächen von einem Modell schneidet, wobei das Verfahren die Schritte enthält:

a) Lesen eines Wertes aus dem Spannen-Speicher, der die Anzahl von Abtastlinien anzeigt,
b) Lesen einer y Koordinate für eine Abtastlinie und eine Anzahl von Spannen in dieser Abtastlinie aus dem Spannen-Speicher,
c) Lesen eines Wertes aus dem Spannen-Speicher, der die Anzahl von Voxeln in dieser Spanne anzeigt,
d) Lesen eines Ortes entlang der Abtastlinie und eines Normalvektors $(n_x,n_y,n_z)$ für alle Voxel in jeder Spanne,
e) lineares Interpolieren eines Satzes von in regelmäßigen Abständen angeordneten Koordinaten für einen Satz von Zwischenpunkten zwischen den Koordinaten für diese Spanne,
f) lineares Interpolieren eines Normalvektors für jeden Zwischenpunkt aus den Normalvektoren $(n_x,n_y,n_z)$, die für die vorhandene Spanne gelesen sind,
g) Speichern der interpolierten Koordinaten zusammen mit entsprechenden Normalvektoren als einen Display-Listen-Speicher für eine schnelle Rasterung,
h) Wiederholen der Schritte "c" - "g" für alle Spannen in dieser Abtastlinie und
i) Wiederholen der Schritte "b" - "h" für alle Abtastlinien in dem Datensatz.

**Revendications**

**1.** Station de travail graphique destinée à manipuler un ensemble de données volumétriques pour afficher des images de surface en trois dimensions d'un objet représenté par l'ensemble de données comprenant un premier dispositif d'entrée (40) pour définir des plans de coupe de modèle de l'objet, un deuxième dispositif d'entrée (50) pour définir une orientation tridimensionnelle de l'objet dans l'espace, un troisième dispositif d'entrée (60) pour définir des plans de vues d'écran à découper dans l'objet et un moniteur (250) pour afficher des images graphiques, **caractérisé par**

a) une mémoire de portées (30) pour recevoir et stocker l'ensemble de données volumétriques produit par les premier, deuxième et troisième dispositifs d'entrée
b) un processeur de portées (32) pour recevoir l'ensemble de données volumétriques et traiter l'ensemble de données volumétriques pour créer une liste de portées qui est plus compacte que l'ensemble de données volumétriques, le processeur de portées ayant des moyens pour stocker l'ensemble de données dans la mémoire de portées, pour lire la liste de portées dans la mémoire de liste de portées et pour convertir la liste de portées en une liste d'affichage (20) de points et de normales composée de points $(x',y',z')$ et de vecteurs normaux correspondants $(n_x,n_y,n_z)$; et comprenant :

i) des moyens pour lire une valeur dans la mémoire de portées indiquant le nombre de lignes de portées;
ii) des moyens pour lire une coordonnée y pour une ligne de portées et une pluralité de portées de cette ligne de portées dans la mémoire de portées;
iii) des moyens pour lire une valeur dans la mémoire de portées indiquant le nombre de voxels (éléments de volume) de cette portée;
iv) des moyens pour lire un emplacement le long de la ligne de portées et un vecteur normal $(n_x,n_y,n_z)$ pour tous les voxels de chaque portée;
v) des moyens pour interpoler linéairement un ensemble de coordonnées régulièrement espacées pour un ensemble de points intermédiaires entre les coordonnées de cette portée;
vi) des moyens pour interpoler linéairement un vecteur normal pour chaque point intermédiaire à partir des vecteurs normaux $(n_x,n_y,n_z)$ lus pour la portée actuelle;
vii) des moyens pour stocker les coordonnées interpolées avec les vecteurs normaux correspondants comme mémoire de liste d'affichage pour un rendu rapide;
viii) des moyens pour répéter les étapes "iii" - "vii" pour toutes les portées de ces lignes de portées;
ix) des moyens pour répéter les étapes "ii" - "vii" pour toutes les lignes de portées de l'ensemble de données et

c) une carte accélératrice (5) employant un tampon de profondeur (180), la carte accélératrice étant apte à recevoir (10) les plans de coupe de modèle, une orientation tridimensionnelle (130), des plans de vues d'écran (150), et une liste d'affichage de points et de normales et apte à créer une image ombrée tridimensionnelle d'une surface de solide à partir de la liste d'affichage de points et de normales selon les plans de coupe de modèle, l'orientation tridimensionnelle, et les plans de vues d'écran, et à afficher l'image à une fréquence de plusieurs fois par seconde sur le moniteur.

2. Station de travail graphique selon la revendication 1, dans laquelle la carte accélératrice comprend :

a) une mémoire (20) de listes d'affichage de points et de normales apte à stocker des listes de points et de normales;
b) un circuit (70) d'écrêtage de modèle réagissant à ladite mémoire de listes d'affichage de points et de normales et audit premier dispositif d'entrée (40) pour créer un signal indiquant quand un point (x,y,z) est à l'intérieur d'une région spécifiée par des plans de coupe de modèle définis par le premier dispositif d'entrée;
c) un circuit de rotation (130) réagissant à ladite mémoire (20) de listes d'affichage de points et de normales et audit deuxième dispositif d'entrée (50) pour transformer chaque point (x,y,z) et chaque vecteur $(n_x,n_y,n_z)$ en la liste d'affichage de points et de normales selon l'orientation tridimensionnelle reçue du deuxième dispositif d'entrée en un point transformé (x',y',z') ayant une adresse (x',z'), une profondeur Z, et une intensité de pixels pix;
d) un circuit d'écrêtage d'écran (150) réagissant audit circuit de rotation (130) et audit troisième dispositif d'entrée (60) pour créer un signal indiquant quand un point transformé (x',y', z') est à l'intérieur de la région définie par des plans de vues d'écran reçus du troisième dispositif d'entrée;
e) un circuit d'affichage (180, 210, 220, 190) pour former une image tridimensionnelle (M) de surfaces multiples à partir du point transformé (x',y',z') et de l'intensité de pixels, pix, en réponse aux signaux reçus des circuits de découpage de modèle et d'écrêtage-d'écran et pour passer l'image en 3D au moniteur pour être affichée.

3. Station graphique selon la revendication 1 ou 2, dans laquelle le circuit d'affichage comprend :

a) une mémoire tampon de profondeur (180) couplée au circuit de rotation (130) pour recevoir une adresse (x',y') du circuit de rotation et stocker une profondeur à l'adresse (x',y');
b) un circuit de comparaison (210) couplé au circuit de rotation (130) et à la mémoire tampon de profondeur (180), ledit circuit de comparaison étant apte à :

(1) recevoir un signal représentant la profondeur z' du circuit de rotation,
(2) lire la profondeur actuelle stockée dans l'adresse (x',y') de la mémoire tampon de profondeur et la comparer à la profondeur z' reçue du circuit de rotation, et
(3) créer un signal indiquant si la profondeur z' est plus proche de l'utilisateur que la profondeur actuelle stockée dans la mémoire tampon de profondeur;

c) et un circuit ET (220) apte à :

(1) recevoir un signal du circuit d'écrêtage de modèle indiquant si le point (x',y',z') est à l'intérieur de la région définie par les plans de coupe de modèle,
(2) recevoir un signal du circuit d'écrêtage d'écran indiquant si le point (x',y',z') est à l'intérieur de la région définie par les plans de vues d'écran, et
(3) recevoir le signal du circuit de comparaison, et
(4) créer et mettre à jour un signal indiquant quand le point (x',y',z') est à l'intérieur des deux régions définies par les plans de coupe de modèle et les plans de vues d'écran et a une profondeur z' inférieure à la profondeur dans la mémoire tampon de profondeur à l'adresse (x',y'); et

(d) une mémoire tampon d'image (190) ayant une adresse correspondant à chaque point du moniteur d'affichage, ladite mémoire tampon d'image étant apte à recevoir l'adresse (x',y') et le signal indiquant l'intensité de pixels pix du circuit de rotation, pour recevoir le signal de mise à jour créé par le circuit ET, et à stocker l'intensité de pixels pix à l'adresse (x',y') en créant une image à afficher sur le moniteur.

4. Station graphique selon l'une quelconque des revendications 1 à 3, comprenant un appareil d'imagerie en trois dimensions couplée à celle-ci et comprenant l'un du groupe composé d'un système de tomographie à émission de positrons, d'un système d'imagerie à résonance magnétique, d'un système de tomographie axiale informatisé, d'un système à ultrasons à trois dimensions et d'un système RADAR tridimensionnel, et d'une source de données tridimensionnelles destinée à fournir des données volumétriques pour définir un modèle de surface.

5. Procédé de conversion d'une liste de portées en une liste d'affichage de points et de normales, ladite liste de portées énumérant des portées comprenant des segments de ligne où la ligne de portées coupe la surface d'un modèle, le procédé comprenant les étapes consistant à :

a) lire une valeur dans une mémoire de portées indiquant le nombre de lignes de portées;

f) lire une coordonnée y pour une ligne de portées et une pluralité de portées de cette ligne de portées dans la mémoire de portées;

g) lire une valeur dans la mémoire de portées indiquant le nombre de voxels de cette portée;

h) lire un emplacement le long de la ligne de portées et un vecteur normal $(n_x, n_y, n_z)$ pour tous les voxels de chaque portée;

i) interpoler linéairement un ensemble de coordonnées régulièrement espacées pour un ensemble de points intermédiaires entre les coordonnées pour cette portée;

j) interpoler linéairement un vecteur normal pour chaque point intermédiaire à partir des vecteurs normaux $(n_x, n_y, n_z)$ lus pour la portée actuelle;

k) stocker les coordonnées interpolées avec les vecteurs normaux correspondants comme mémoire de listes d'affichage pour un rendu rapide;

l) répéter les étapes "c" - "g" pour toutes les portées de ces lignes de portées; et

m) répéter les étapes "b" - "h" pour toutes les portées de l'ensemble de données.

*Fig. 1*

**Fig. 2**

Fig. 3

**Fig. 4**

*Fig. 5a*

Ⓐ Ⓑ          Ⓒ

652

last
scan line
?
                    yes          660
                                 store nscans

no    656

if ≥ 1 intersecting
voxels occurred for
this scan line, then
increment nscans; and
store y coord.

658
increment y coord.

662

last layer
?
                    yes          668
                                 store nlayers

no    664                        670

if ≥ 1 intersecting              save stored data
voxels occurred for              in hierarchical
this layer, then                 structure
increment nlayers; and
store z coord.

666                              FINISHED
increment z coord.

## Fig. 5b

18

DISPLAY LIST

nlayers   DATA LAYER1   DATA LAYER2   DATA LAYER3

z   nscans   SCAN LINE1   SCAN LINE2   SCAN LINE3

y   nspans   SPAN1   SPAN2   SPAN3

nvoxels   VOXEL1   VOXEL2   VOXEL3

x   $n_x$   $n_y$   $n_z$

*Fig. 6*